# EUROPÄISCHE PATENTSCHRIFT

(11) **EP 2 619 049 B1**
(45) Veröffentlichungstag und Bekanntmachung des Hinweises auf die Patenterteilung: **30.11.2016**
(21) Anmeldenummer: 11755337.0
(22) Anmeldetag: 12.09.2011
(51) Int. Cl.: B60T 7/12, B60T 8/17, B60T 8/18, B60T 13/26, B60T 13/36, B60T 13/46, B60T 13/57, B60T 15/18, B60T 15/22, B60T 15/34, B60T 15/42, B60T 15/48, B60T 15/52, B60T 17/22

(54) **STEUERVENTIL MIT VERÄNDERBAREM DÜSENQUERSCHNITT FÜR SELBSTTÄTIGE DRUCKLUFTBREMSEN**
CONTROL VALVE HAVING A VARIABLE NOZZLE CROSS-SECTION FOR AUTOMATIC COMPRESSED-AIR BRAKES
VALVE DE COMMANDE À SECTION D'AJUTAGE VARIABLE POUR FREINS PNEUMATIQUES AUTOMATIQUES

(30) Priorität: 20.09.2010 EA 201001379
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: HELLER, Martin, 85716 Unterschleißheim (DE); KRYLOV, Vladimir, Moskau 127322 (RU); PETTER, Thomas, 80336 München (DE); ROMANOV, Sergey, Moskau 111558 (RU)
(74) Vertreter: Schönmann, Kurt
(86) Internationale Anmeldenummer: PCT/EP2011/065723
(87) Internationale Veröffentlichungsnummer: WO 2012/038283

(56) Entgegenhaltungen:
- EP-A1- 0 846 605
- EP-A2- 1 285 834
- DE-A1- 4 309 298
- DE-A1- 4 329 481
- DE-C- 800 054
- DE-C- 814 168
- DE-C- 816 409
- DE-C- 816 410
- DE-C- 823 890
- DE-C- 826 312
- DE-C- 835 754
- SU-A1- 557 944

## Beschreibung

Die vorliegende Erfindung betrifft ein Steuerventil für selbsttätige Druckluftbremsen zur Bildung eines Bremszylinderdruckes nach Maßgabe einer Druckdifferenz zwischen einem Druck in der durchgehenden Hauptluftleitung eines Zuges und einem gespeicherten Referenzdruck, der vom Druck in der Hauptluftleitung abgeleitet ist.

Das Einsatzgebiet der vorliegenden Erfindung ist der Schienenfahrzeugbau. Schienenfahrzeuge haben meist eine selbsttätige (automatische) Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen ausgeführt. Die Geschwindigkeit der Übertragung von Druckänderungen in der Hauptluftleitung, die Gradienten und die Gleichmäßigkeit des Auf- und Abbaus des Bremszylinderdruckes beim Bremsen und Lösen sind wesentliche Parameter, die den sicheren Betrieb langer, schwerer und schneller Züge ohne gefährliche längsdynamische Kräfte gestatten. Die Steuerventile weisen daher Einrichtung zur zeitlichen Steuerung der Vorgänge auf, deren Effizienz direkt die Sicherheit und Wirtschaftlichkeit des Eisenbahnbetriebes beeinflussen.

Grundsätzlich ist es vorteilhaft, wenn der Druckanstieg in den Bremszylindern, z.B. bei einer plötzlichen Voll- oder Schnellbremsung, mit Einheitswirkung erfolgt. Unter Einheitswirkung ist die Unabhängigkeit der Bremszylinderfüllzeit bei Schnellbremsung von der Größe des Bremszylindervolumens oder der Höhe des maximalen Bremszylinderdrucks in einem LK: bestimmten Wertebereich zu verstehen. Die Füllung der Bremszylinder darf nicht zu schnell erfolgen, um gefährliche Längskräfte im Zug zu vermeiden - eine unnötig langsame Füllung würde demgegenüber einen unnötig langen Bremsweg bedeuten und ist daher ebensowenig erwünscht.

Gemäß des allgemein bekannten Standes der Technik wird die Einheitswirkung mit Relaisventilen erzielt, welche den Steuerventilen nachgeschaltet werden. Diese Lösung hat jedoch den Nachteil, dass zusätzlich zum Steuerventil ein solches Relaisventil benötigt wird.

Aus der SU 557944 A1 ist eine ähnliche Ventilanordnung bekannt.

Aus der Patentschrift DD 239 166 ist bekannt, die Einheitswirkung an einem Dreidruck-Steuerventil ohne Relaisventil zu erzielen, in dem der mit der Hauptluftleitung verbundenen Kammer des Dreidruck-Steuerventils die für die Bremszylinderfüll- und -entleerungszeit maßgeblichen Düsen vorgeschaltet werden. Diese Lösung hat den Nachteil, dass die Luft aus der Steuerkammer in die Hauptluftleitung strömen könnte, wodurch eine schädliche Verlangsamung der Signalübertragung in der Hauptluftleitung verursacht werden kann.

In dem Fachbuch des Autors V.I. KRYLOV mit dem Titel "Avtomatičeskije Tormoza Podviznogo Sostava" (Moskau, Transport 1968, Seite 147) ist ein pneumatisches Steuerventil beschrieben, bei dem ein Referenzdruck S durch ein Hauptteil des Steuerventils in den Bremszylinderdruck umgewandelt wird. Das Hauptteil erzeugt den Bremszylinderdruck, indem Druckluft über Bohrungen von bestimmter Größe vom Vorratsluftbehälter zum Bremszylinder strömt. Die Bremszylinderfüllzeit ist damit vom Verhältnis dieser Bohrungen zum Bremszylindervolumen abhängig. Zur Erreichung einer Einheitswirkung mit effektiver Beschleunigung des Bremssignals in der Hauptluftleitung soll die Bremszeit jedoch unabhängig von Bohrungsgrößen des Hauptteils und dem Bremszylindervolumen sein, damit ein unifiziertes, universell verwendbares Steuerventil entsteht.

Ein Leitungsteil ist durch die RU 481480 bekannt. Es erzeugt aus dem Druckverlauf der Hauptluftleitung einen Druckverlauf in einem Referenzvolumen, genannt Schieberkammer. Es enthält einen beweglichen Kolben, belastet vom Druck aus der Hauptluftleitung und von dem Referenzdruck, und betätigt ein Ventil der zusätzlichen Entlüftung und ein Ventil zur Entlüftung der Schieberkammer, zu welchem parallel eine Unempfindlichkeitsdüse angeordnet ist. Die Ableitung der Druckluft aus dem Ventil der zusätzlichen Entlüftung verzweigt sich in einen Kanal der zusätzlichen Entlüftung und zu einer Düse zur Atmosphäre.

Nachteil dieser Lösung ist, dass entweder eine effektive Beschleunigung der Signalübertragung in der Hauptluftleitung möglich ist, wozu die Düse zur Atmosphäre ausreichend groß sein muß. Oder es ist eine ausreichend langsame Absenkung des Druckes in der Schieberkammer möglich, was eine wesentlich kleinere Düse erfordert. Die ausreichend langsame Absenkung des Druckes in der Schieberkammer ist erforderlich, um einen ausreichend langsamen Aufbau des Bremszylinderdruckes im vorderen Zugteil zu erreichen.

Sowohl durch eine nicht effektive Beschleunigung der Signalübertragung im Zug als auch durch eine nicht ausreichend langsamen Aufbau des Bremszylinderdruckes können gefährliche Längskräfte im Zug entstehen. Zu deren Vermeidung müssen Zuglänge und Zuggewicht beschränkt werden, oder zusätzliche Einrichtungen zur Verzögerung des Bremszylinderdruckes eingesetzt werden - mithin ein wirtschaftlicher Nachteil.

Der Erfindung liegt die Aufgabe zugrunde, ein pneumatisches Steuerventil für selbsttätige Druckluftbremsen zu schaffen, welches ein Leitungsteil enthält, das einen Referenzdruck für den notwendigen zeitlichen Verlauf des Bremszylinderdruckes bildet und gleichzeitig eine effiziente Beschleunigung der Drucksenkung in der Hauptluftleitung dezentral im Zug sichert.

Erfindungsgemäß wird die Aufgabe ausgehend von einem pneumatischen Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildung der Erfindung wieder.

Die Erfindung schließt die technische Lehre ein, dass auf dem Weg der Entlüftung des Druckes aus der Steuerkammer S zur Umgebung mindestens eine variable Düse angeordnet ist, deren Querschnitt über Betätigungsmittel von einem geschlossenen Zustand oder einen Minimalquerschnitt bis zu einem Maximalquerschnitt veränderbar ist. Die Veränderbarkeit kann dabei sowohl abgestuft als auch stufenlos durchgeführt werden. Neben zumindest einer Düse können mehrere Düsen parallel oder in Reihe geschaltet sein, wobei mindestens eine der mehreren Düsen als erfindungsgemäß variable Düse dient.

Durch den veränderlichen Querschnitt läßt sich bei schneller Absenkung der Hautluftleitung ein ausreichend langsame Absenkung des Referenzdruckes S erzielen, der somit als Referenz für eine Bremszylinderfüllzeit mit Einheitswirkung verwendbar ist.
Bei langsamer Absenkung des Druckes in der Hauptluftleitung kann die Düse soweit vergrößert werden, das ein für die Beschleunigung der Bremsung erforderliche Luftmenge ausströmen kann.

Ein erfindungsgemäßes Steuerventil hat somit den Vorteil, dass seine beschleunigende Wirkung auf die Absenkung des Druckes in der Hauptluftleitung auch am Ende langer Züge optimal durch die Auswahl eines geeigneten Maximalquerschnittes eingestellt werden kann. Damit verbunden ist die Möglichkeit durch eine geeignet Auswahl des Minimalquerschnittes für die Zugspitze eine ausreichend langsame Entwicklung des Bremszylinderdruckes einzustellen, was der Vermeidung gefährlicher Längskräfte dient. Beides gestattet höhere Geschwindigkeiten oder größere Längen der Züge.

Aufgrund der Wirkung der Düsenquerschnitte auf die Entlüftungsgeschwindigkeit eines Referenzdruckes aus einem konstanten Volumen ergibt sich weiter der Vorteil, dass die sich einstellenden Gradienten unabhängig von der Anzahl und der Größe der Bremszylinder sowie dem Bremszylinder-Höchstdruck sind, so dass ein unifiziertes Steuerventil wirtschaftlich günstig hergestellt werden kann.

In vier bevorzugten Ausführungsformen ergeben sich weitere Vorteile.
Für eine erste Ausführungsform wird vorgeschlagen, dass die Betätigung der veränderlichen Düsen durch eine Stange am Ventilkörper des Beschleunigungsventils verwirklicht wird. In dieser Stange befinden sich zwei Düsen, welche durch eine Bohrung verbunden sind, die über einem durch Dichtungen abgetrennten Raum und eine Entlüftungsbohrung oder -düse im Ventilgehäuse einen Luftweg in die Umgebung bildet. Die Bohrung sei so groß bemessen, dass sie zur Drosselung des Luftweges gegenüber den Düsen nicht wesentlich beiträgt.

In einer geschlossenen oder einer leicht geöffneten Stellung des Beschleunigungsventils stellen beide Düsen eine Verbindung von KZE-Kanal über die Entlüftungsbohrung oder - düse in die Umgebung her. Dies entspricht dem Zustand "langsame L-Absenkung mit größerem Luftauslaß aus dem Kanal KZE zum Zwecke der Beschleunigung der Bremsung", z.B. am Ende längerer Züge. Effektiv wirkt ein Entlüftungsquerschnitt, der den beiden parallelwirkenden Düsen in Reihe zur Entlüftungsbohrung oder -düse entspricht, dabei ist es ohne Bedeutung welches Element der Reihenschaltung den größeren Widerstand verursacht. Nach einem ausreichend weitem Öffnen des Beschleunigungsventils, verbunden mit einem Öffnen des Entlüftungsventils schiebt sich ein der Düsen über eine gehäusefeste dynamische Dichtung, so dass sie keine Verbindung von KZE-Kanal in die Umgebung mehr herstellt. Dies entspricht dem Zustand "schnelle L-Absenkung mit geringerem Luftauslaß aus dem Kanal KZE zum Zwecke der mäßig langsamen Füllung der Bremszylinder mit Einheitswirkung", z.B. im vorderen Zugteil.

Der Vorteil dieser Ausführungsform besteht darin, dass das Betätigungsmittel für die Änderung des Querschnittes der Düse auf einfachste Weise in Form einer Verlängerung des

Beschleunigungsventils gebildet wird, und dass aufgrund der zwangsläufig gemeinsamen Betätigung mit dem Beschleunigungsventil eine hohe Funktionssicherheit erreichbar ist.

Gemäß einer zweiten Ausführungsform sind zwei parallel geschaltete Düsen gegenüber einem beweglicher Kolben als Betätigungsmittel angeordnet. Der Kolben ist hier ein unabhängig vom Steuerkolben des Leitungsteils wirkendes Teil für die Betätigung der Düsen.
Er dient dabei als zum Schließen eines Sitzventils, wozu eine gehäusefeste Dichtung mit der Stirnseite des Kolbens zusammenwirkt. Der Kolben wird in Schließrichtung von einer Druckfeder und dem Druck aus dem KZE-Kanal beaufschlagt. In Gegenrichtung wirkt auf den Kolben der Referenzdruck S. Bei Anlage des Kolbens an der Dichtung stellt nur noch eine der Düsen eine Verbindung vom KZE-Kanal in die Umgebung her, die zweite ist durch das nun geschlossene Sitzventil unwirksam. Dies ist der Fall bei einer schnellen Entlüftung der Hauptluftleitung, deren Merkmal eine annähernde Gleichheit der Drücke im Kanal KZE und in der Steuerkammer S ist. In diesem Fall ist insgesamt nur ein kleinerer, die Entlüftung des S-Druckes verlangsamende Entlüftungsquerschnitt wirksam. Bei einer langsamen Entlüftung der Hauptluftleitung, deren Merkmal eine größere Druckdifferenz zwischen der Steuerkammer S und dem Kanal KZE ist, bewegt sich der Kolben nach oben und es ist in Summe mit der Summe aus beiden Düsen eine größerer, die Entlüftung der Hauptluftleitung beschleunigender Querschnitt wirksam.

Diese Bauart hat den Vorteil, dass die Betätigung unabhängig von bereits existierenden Steuerventilen und von räumlichen oder fertigungstechnischen Beschränkungen als unabhängige Baugruppe verwirklicht werden kann.

Eine dritte mögliche Ausführungsform ähnelt der zweiten mit dem Unterschied, dass die Düsen in Reihenschaltung ausgeführt werden. Das Umschalten von einem kleineren zu einem größeren Entlüftungsquerschnitt als Äquivalent der Reihenschaltung erfolgt dadurch, dass durch ein Betätigungsmittel zu einer der Düsen ein Bypass zugeschaltet wird.

Hierzu ist ein Ventil vorgesehen. Dieses wird durch den Kolben gegen die Kraft einer Druckfeder geöffnet. Eine der Düsen ist parallel zum Ventil und die zweite Düse ist in Ausströmrichtung zur Umgebung nach dem Ventil angeordnet. Der Kolben wird in Öffnungsrichtung vom Referenzdruck beaufschlagt. In Schließrichtung wird der Kolben durch den Druck des KZE-Kanals mit Unterstützung der Druckfeder beaufschlagt.

Auch bei dieser dritten Ausführungsform stellt der Kolben vorzugsweise das Verschlusselement eines Sitzventils dar, wobei die erforderliche Dichtung gehäuseseitig oder kolbenseitig angeordnet sein kann. Der Austausch von Sitz- zu Schieberventilen ist ohne Änderungen der Wirkungsprinzip möglich. Ebenso ist es möglich, statt einer mehrere Düsen zu- oder abzuschalten, oder eine Düse allmählich z.B. durch die Annäherung eines Konus in die Düsenbohrung zu verändern, so dass sich eine mehr als einstufige Veränderung ergibt. Diese Ausführungsform hat den Vorteil, dass aufgrund der Reihenschaltung der Düsen der kleinste Düsendurchmesser größer gewählt werden kann als bei Parallelschaltung, womit sich die Gefahr von Verstopfungen und die Anforderungen an die Herstellungsgenauigkeit vermindern.

Eine vierte mögliche Ausführungsform enthält wiederum eine Stange am Beschleunigungsventil als Betätigung veränderbare Düsen. Die Stange enthält eine koaxiale Bohrung und sowie Querbohrungen mit einem geeigneten Durchmesser an drei Positionen über der Achse der Stange.

Zwei der drei Querbohrungen wirken als die veränderliche bzw. als feststehende Düse, die dritte, dem Beschleunigungsventil abgewandte, sei in ihrem Querschnitt groß gegen die Düsen, ebenso wie die koaxiale Bohrung.

Die Stange kann sich gleitend in zwei Dichtungen bewegen, und sie öffnet nach dem Anstoßen das Entlüftungsventil für den Referenzdruck, wenn sich das Beschleunigungsventil bei starker oder schneller Bremsung weit öffnet. Ein innerer Raum zwischen den beiden Dichtung dient der Ableitung von Druckluft über eine Entlüftungsbohrung oder -düse im Gehäuse, ein äußerer Raum bzw. Kanal, der den inneren von außen umschließt, nimmt die Druckluft aus dem geöffnetem Beschleunigungs- und Entlüftungsventil auf. Die Veränderlichkeit der Düsen kommt hier zustande, indem keine, eine größere oder zwei Querbohrungen über die Dichtung zwischen innerem und äußeren geschoben werden, je nachdem das Entlüftungsventil mit der Stange geschlossen, wenig oder weiter geöffnet ist. Hierbei sind folgende Stellungen möglich:
In geschlossener Stellung (Fahrtstellung) befinden sich alle Querbohrung im inneren Raum, so dass es keine Verbindung zum äußeren Raum, daher auch keine Entlüftung gibt. In wenig geöffneter Stellung des Beschleunigungsventils befindet sich eine Querbohrung im äußeren Raum, und zwei Querbohrungen im inneren Raum. Durch die geeignete Bemessung der Querbohrungen, insbesondere einer ausreichend großen äußersten dritten Querbohrung, entspricht das einer relativ starken Entlüftung des äußeren über den inneren Raum, wodurch die gewünschte effiziente Beschleunigung dezentralen Entlüftung der Hauptluftleitung hergestellt wird.

In einer weit geöffneten Stellung des Beschleunigungsventils stößt die Stange an das Entlüftungsventil des Referenzdruckes und öffnet auch dieses. In dieser Stellung ist nur noch eine Bohrung im inneren Raum befindlich. Durch die geeignete Bemessung der Querbohrungen, insbesondere einer ausreichen kleinen innersten Querbohrung, ergibt sich in dieser Stellung ein kleiner Entlüftungsquerschnitt entsprechend des für die Einheitswirkung erforderlichen Gradienten der Entlüftung des Referenzdruckes.

Es ist ohne Änderung dieses Prinzip möglich, jeweils eine der genannten Querbohrungen durch mehrere, auf gleicher Längskoordinate auf dem Umfang der Stange verteilte zu ersetzten. Dies ergibt je nach Dichtungsbauart einen Vorteil für die Lebensdauer, da die Beanspruchung der Dichtung durch mehrere kleine überschleifende Bohrungen geringer sein kann als bei einer großen.

Weitere, die Erfindung verbessernde Maßnahmen werden nachstehend gemeinsam mit der Beschreibung der vier bevorzugten Ausführungsformen der Erfindung anhand der Figuren näher dargestellt. Es zeigt:
- Figur 1: eine schematische Seitenansicht des Leitungsteils eines pneumatischen Steuerventils in allgemeiner Form,
- Figuren 2a und 2b: Detaildarstellungen der erfindungsgemäßen variablen Düsentechnik im Leitungsteil gemäß der ersten Ausführungsform, in zwei möglichen Bewegungslagen,
- Figur 3: eine Detaildarstellung der erfindungsgemäßen variablen Düsentechnik im Leitungsteil gemäß der zweiten Ausführungsform,
- Figur 4: eine Detaildarstellung der erfindungsgemäßen variablen Düsentechnik im Leitungsteil gemäß der dritten Ausführungsform, und
- Figur 5: eine Detaildarstellung der erfindungsgemäßen variablen Düsentechnik im Leitungsteil gemäß der vierten Ausführungsform.

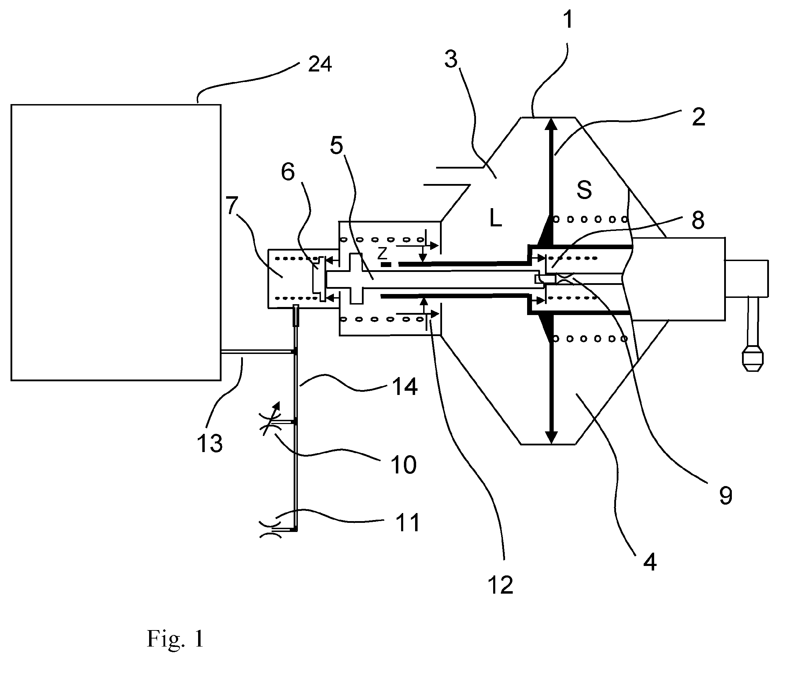

Gemäß Figur 1 weist das hier dargestellte auch als Leitungsventil bezeichnete Zweidruckorgan 1 eines pneumatischen Steuerventils einen Steuerkolben 2 auf, der von der einen Seite her über eine erste Steuerkammer 3 mit dem Hauptluftleitungsdruck L beaufschlagt ist. Von der gegenüberliegenden Seite her wirkt auf den Steuerkolben 2 der in einer zugeordneten zweiten Steuerkammer 4 herrschende Referenzdruck S. Vom Steuerkolben 2 geht eine Stange 5 aus, welche mit ihrem Ende ein Beschleunigungsventil 6 betätigt.

Dabei stützt sich die Stange 5 auf ein Entlüftungsventil 8 für den Referenzdruck S ab, welches durch eine Druckfeder geschlossen gehalten wird. Diese Druckfeder ist stärker als die des Beschleunigungsventils 6, so dass letzteres zuerst öffnet. Durch Öffnen des Beschleunigungsventils 6 über die Stange 5 des Steuerkolbens 2 erfolgt eine Bremsbeschleunigung, in dem zusätzlich Druckluft aus der Hauptluftleitung L über ein Rückschlagventil 12 und einen im Leitungsteil 1 integrierten Kanal KZE 7 (Kanal der zusätzlichen Entlüftung) an die Umgebung abgelassen wird. Der Kanal KZE kann dazu einen ersten Entlüftungsweg 13 zum auch als Hauptteil bezeichnete Dreidruckorgan 24 des Steuerventils aufweisen, über welche bei Beginn der Bremsung eine größere Luftmenge entweichen kann.

Durch die Öffnung des Entlüftungsventils 8 wird eine Verbindung vom Referenzdruck S zum Kanal KZE geschaffen, infolgedessen sind die Drücke in beiden annähernd gleich, das Rückschlagventil 12 ist geschlossen und es wird keine Luft aus der Hauptluftleitung L entnommen, wohl aber aus der Referenzdruckkammer.

Erfindungsgemäß sind in einem Entlüftungsweg 14 des Kanals KZE 7 zur Umgebung eine erste Drosselstelle 10 und eine Drosselstelle 11 angeordnet. Während die zweite Drosselstelle 11 einen festen Querschnitt besitzt, ist die erste Drosselstelle 10 im Querschnitt variabel. Der Querschnitt der variablen Drosselstelle 10 ist über Betätigungsmittel von dem Minimalquerschnitt bis zu einem Maximalquerschnitt veränderbar, um die Einheitswirkung der Bremszylinderfüllzeit ohne Beeinträchtigung der Beschleunigungswirkung zu gewährleisten. Eine ausreichende Veränderlichkeit ist bereits gegeben, wenn die Drosselstelle entweder vollkommen geöffnet oder geschlossen sein kann. Jedoch kann anstelle der geschlossenen Stellung auch ein definierter Minimalquerschnitt treten, in diesem Fall ist die zweite Drosselstelle 11 nicht erforderlich.

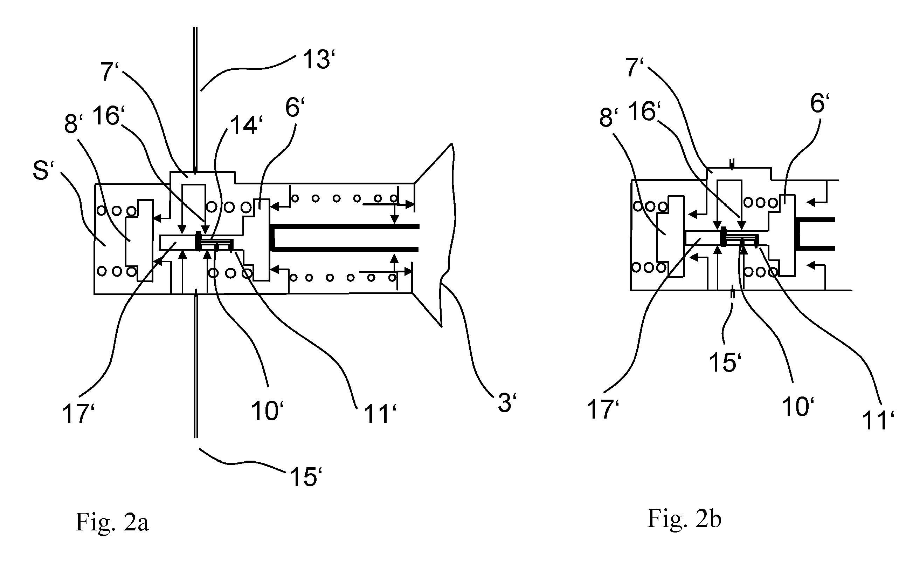

Bei der in den Figuren 2a und 2b gezeigten Ausführungsform wird die Betätigung der veränderlichen Drosselstellen 10' und 11' durch eine Stange 17' am Ventilkörper des Beschleunigungsventils 6' verwirklicht.

In dieser Stange 17' befinden sich die Drosselstellen 10' und 11', welche durch eine Bohrung 14' verbunden sind, die über einem durch Dichtungen abgetrennten Raum und eine Entlüftungsbohrung oder -düse 15' einen Luftweg vom Kanal KZE in die Umgebung bildet. Der Entlüftungsweg 14' ist so groß bemessen, dass dieser zur Drosselung des Luftweges gegenüber den Drosselstellen nicht wesentlich beiträgt.

In der in Figur 2a dargestellten geschlossenen oder einer leicht geöffneten Stellung des Beschleunigungsventils 6' stellen beide Drosselstellen 10' und 11' eine Verbindung von Kanal KZE 7' über die Entlüftungsbohrung oder -düse 15' in die Umgebung her. Dies entspricht dem Zustand "langsame L-Absenkung mit größerem Luftauslaß aus dem Kanal KZE zum Zwecke der Beschleunigung der Bremsung", z.B. am Ende längerer Züge. Effektiv wirkt ein Entlüftungsquerschnitt, der den Drosselstellen 10' und 11' in Reihe zur Entlüftungsbohrung oder -düse 15' entspricht, dabei ist es ohne Bedeutung welches Element der Reihenschaltung den größeren Widerstand verursacht.

Nach einem ausreichend weitem Öffnen des Beschleunigungsventils 6' in Figur 2b verbunden mit einem Öffnen des Entlüftungsventils 8' schiebt sich die variable Drosselstelle 10' über eine gehäusefeste dynamische Dichtung 16', so dass diese Drosselstelle 10' keine Verbindung von KZE-Kanal 7' in die Umgebung mehr herstellt.

Dies entspricht dem Zustand "schnelle L-Absenkung mit geringerem Luftauslaß aus dem Kanal KZE zum Zwecke der mäßig langsamen Füllung der Bremszylinder mit Einheitswirkung", z.B. im vorderen Zugteil.

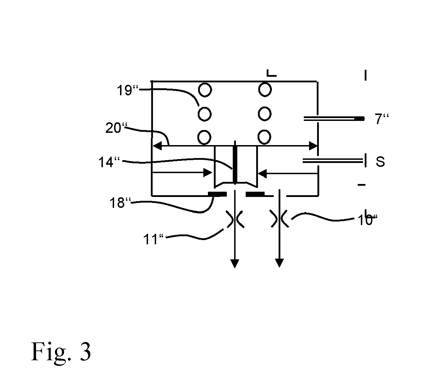

Gemäß der in Figur 3 dargestellten zweiten Ausführungsform sind zwei parallel geschaltete Drosselstellen 10" sowie 11" gegenüber einem beweglicher Kolben 20" als Betätigungsmittel angeordnet. Der Kolben 20" dient dabei als zum Schließen eines Sitzventils, wobei hier eine gehäusefeste Dichtung 18 mit der Stirnseite des Kolbens 20" zusammenwirkt. Der Kolben 20" wird in Schließrichtung von einer Druckfeder 19" und dem Druck aus dem KZE-Kanal 7" beaufschlagt. In Gegenrichtung wirkt auf den Kolben 20" der Referenzdruck S. Bei Anlage des Kolbens 20" an der Dichtung 18" stellt nur die Drosselstelle 11" eine Verbindung vom KZE-Kanal 7 über einen koaxial im Kolben 20 eingebrachten Entlüftungsweg 14 in die Umgebung her. Dies ist der Fall bei einer schnellen Entlüftung der Hauptluftleitung, deren Merkmal eine annähernde Gleichheit der Drücke im Kanal KZE und in der Steuerkammer S ist. In diesem Fall ist mit der Drosselstelle 11" insgesamt nur ein kleinerer, die Entlüftung des S-Druckes verlangsamende Drosselstelle wirksam. Bei einer langsamen Entlüftung der Hauptluftleitung, deren Merkmal eine größere Druckdifferenz zwischen der Steuerkammer S und dem Kanal KZE ist, bewegt sich der Kolben 17 nach oben und es ist in Summe mit den Drosselstellen 10" und 11" eine größere, die Entlüftung der Hauptluftleitung beschleunigende Drosselstelle wirksam.

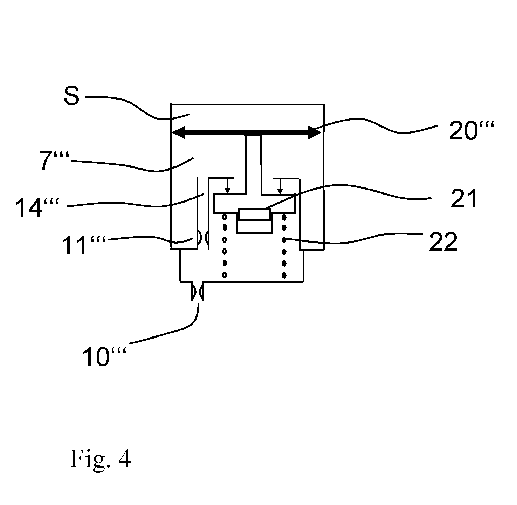

Nach der in Figur 4 dargestellten dritten Ausführungsform sind zwei zueinander in Reihe geschalteten Drosselstellen 10'" und 11'" sowie ein Ventil 21 vorgesehen. Dieses wird durch den Kolben 20"' gegen die Kraft einer Druckfeder 22 geöffnet. Die Drosselstelle 11'" ist parallel zum Ventil 21 und die Drosselstelle 10'" ist in Ausströmrichtung zur Umgebung nach dem Ventil 21 angeordnet. Der Kolben 20'" wird in Öffnungsrichtung vom Referenzdruck S beaufschlagt. In Schließrichtung wird der Kolben 20'" durch den Druck des KZE-Kanals 7 mit Unterstützung der Druckfeder 22 beaufschlagt. Die Veränderlichkeit der Drosselstellen kommt also über den zuschaltbaren Bypass des Ventils 21 zustande.

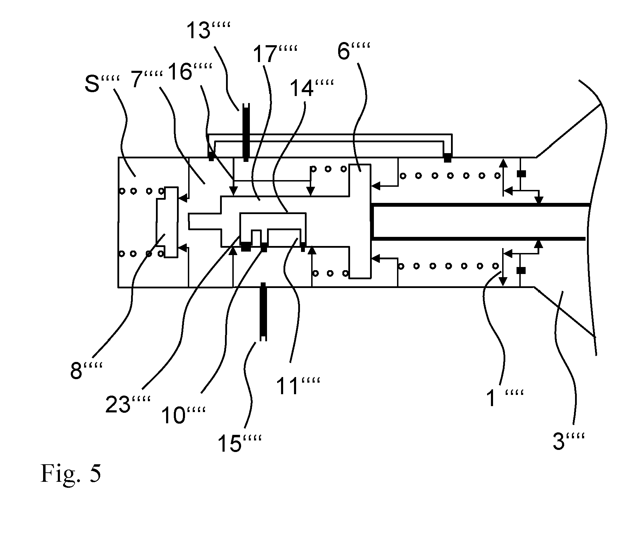

Die in Figur 5 gezeigten konstruktiven Ausführungsform zeigt als Betätigungsmittel der veränderlichen Drosselstellen wiederum eine Stange 17"" am Ventilkörper des Beschleunigungsventils 6"", in welcher zwei zueinander parallel geschaltete Drosselstellen 10"" und 11"" sowie eine groß gegen die Drosselstellen bemessene Bohrung 23"" in Form von Querbohrungen mit einer koaxialen Verbindungsbohrung angeordnet sind. In der dargestellten geschlossenen Stellung des Beschleunigungsventils 6"" besteht keine Verbindung vom Kanal KZE 7'" über die Drosselstellen zur Umgebung. Nach Öffnen des Beschleunigungsventils 6"" schiebt sich zunächst die Bohrung 23"" in den KZE-Kanal 7"", wobei die Verbindung zur Umgebung über beide Drosselstellen 10"" und 11"" sowie die Entlüftungsbohrung 15 zustande kommt. Dies entspricht dem Zustand "langsame L-Absenkung mit größerem Luftauslaß aus dem Kanal KZE zum Zwecke der Beschleunigung der Bremsung", z.B. am Ende längerer Züge.

Nach dem weiteren Öffnen des Beschleunigungsventils 6"" schiebt sich die variable Drosselstelle 10"" über eine gehäusefeste dynamische Dichtung 16"", so dass nun allein die Drosselstelle 11"" den Engpaß der Verbindung von KZE-Kanal 7"" in die Umgebung darstellt. Dies entspricht dem Zustand "schnelle L-Absenkung mit geringerem Luftauslaß aus dem Kanal KZE zum Zwecke der mäßig langsamen Füllung der Bremszylinder mit Einheitswirkung", z.B. im vorderen Zugteil.

Die Erfindung ist nicht beschränkt auf die vorstehend beschriebenen vier bevorzugten Ausführungsformen. Es sind vielmehr auch Abwandlungen hiervon denkbar, welche vom Schutzbereich der nachfolgenden Ansprüche mit umfasst. So ist es beispielsweise auch möglich, die erfindungsgegenständliche variable Drosselstellenanordnung zur Realisierung der Einheitswirkung auch mit sich stufenlos ändernden Querschnitt auszubilden.

### Bezugszeichenliste

- 1: Zweidruckorgan
- 2: Steuerkolben
- 3: erste Steuerkammer
- 4: zweite Steuerkammer
- 5: Stange
- 6: Beschleunigungsventil
- 7: Kanal KZE
- 8: Entlüftungsventil
- 9: Drossel
- 10: Drosselstelle
- 11: Drosselstelle
- 12: Rückschlagventil
- 13: Kanal
- 14: Entlüftungsweg
- 15: Entlüftungsbohrung oder -düse
- 16: dynamische Dichtung
- 17: Stange
- 18: Dichtung
- 19: Druckfeder
- 20: Kolben
- 21: Ventil
- 22: Druckfeder
- 23: Bohrung
- 24: Dreidruckorgan

- S: Referenzdruck
- L: Hauptluftleitungsdruck
- KZE: Kanal der zusätzlichen Entlüftung

## Patentansprüche

1. Steuerventil für indirekt wirkende Druckluftbremsen von Schienenfahrzeugen, enthaltend ein Dreidruckorgan (24) und ein Zweidruckorgan (1), das einen Steuerkolben (2; 2') aufweist, auf welchen von einer Seite der Druck der Luft einer Hauptluftleitung (L), von der gegenüberliegenden der Druck der Luft einer Schieberkammer (S) wirkt und der über einen Stößel (5) mit einem Beschleunigungsventil (6) zusammenwirkt, das in geöffneten Zustand die Hauptluftleitung (L) über ein Rückschlagventil (12) und die Schieberkammer (S) über ein Ventil (8; 8') oder eine Bohrung (9) mit einem Kanal (7) und weiter mit einem Kanal (13) für die zusätzliche Entlüftung bei Bremsbeginn über das Dreidruckorgan (24) und mit einem Entlüftungsweg (14) im Zweidruckorgan (1) mit der Umgebung verbindet,
**dadurch gekennzeichnet, dass** mehrere Drosselstellen (10, 11) parallel oder in Reihe zueinander im Entlüftungsweg (14) des Kanals (7) angeordnet sind, wobei der wirksame Querschnitt mindestens einer der Drosselstellen (10) über Betätigungsmittel im Zweidruckorgan (1) von einem geschlossenen oder unwirksamen Zustand oder einem Minimalquerschnitt bis zu einem Maximalquerschnitt veränderbar ist.

2. Steuerventil nach Anspruch 1,
**dadurch gekennzeichnet, dass** eine der Drosselstellen (10) einen veränderlichen wirksamen Querschnitt, die andere Drosselstelle (11) einen festen wirksamen Querschnitt aufweist, wobei die Veränderung des Querschnittes durch Betätigungsmittel des Zweidruckorgans (1) erfolgt, indem die Drosselstelle (10) geöffnet, geschlossen, reduziert, außerhalb des wirkenden Druckluftstroms verschoben oder durch Öffnung eines Bypass' vergrößerbar ist.

3. Steuerventil nach Anspruch 1 oder 2,
**dadurch gekennzeichnet, dass** zur Betätigung der Querschnittsveränderung der Drosselstelle (10') eine Stange (17') in einer Verlängerung eines Beschleunigungsventils (6') verwendet wird, in welche mindestens Drosselstellen (10' und 11') an einen Entlüftungsweg (14) angeschlossen sind, wobei bei geschlossenem Beschleunigungsventil (6) alle Drosselstellen (10', 11') eine Verbindung vom Kanal (7') in die Umgebung herstellen und sich nach dem Öffnen des Beschleunigungsventils (6') die Drosselstelle (10') durch die Stange (17') über eine gehäusefeste dynamische Dichtung (16') geschoben wird, so dass diese keine Verbindung mehr vom Kanal (7) in die Umgebung herstellt.

4. Steuerventil nach Anspruch 1 oder 2,
**dadurch gekennzeichnet, dass** zur Verbindung des Kanals (7") mit der Atmosphäre mindestens zwei parallelgeschaltete Drosselstellen (10", 11") vorgesehen sind, von denen eine Drosselstelle (11") den Kanal (7") ständig mit der Atmosphäre verbindet und das Öffnen oder Schließen der Verbindung des Kanals (7") zur Atmosphäre über die andere Drosselstelle (10") über einen Kolben (20") gesteuert wird, auf welchen in Schließrichtung eine Druckfeder (19") und der Druck des Kanals (7") und in Gegenrichtung ein Referenzdruck (S) wirkt.

5. Steuerventil nach Anspruch 1 oder 2,
**dadurch gekennzeichnet, dass** für die Verbindung des Kanals (7"') mit der Atmosphäre mindestens zwei in Reihe geschaltete Drosselstellen (10"', 11"') vorgesehen sind, von denen eine Drosselstelle (11"') den Kanal (7"') ständig mit der Atmosphäre verbindet, und der wirksame Querschnitt der zweiten Drosselstelle (10"') durch eine durch ein Ventil (21) geschalteten Bypass derart veränderbar ist, dass das Öffnen oder Schließen des Ventils (21) durch einen Kolben (20"') gesteuert wird, auf welchen in Schließrichtung eine Druckfeder (22) und der Druck der Luft aus dem Kanal (7"') und in Gegenrichtung der Druck der Luft aus der Schieberkammer (S) wirkt.

6. Steuerventil nach Anspruch 1,
**dadurch gekennzeichnet, dass** das Ventil (8) für den Referenzdruck (S) im Steuerkolben (2) integriert angeordnet ist.

7. Steuerventil nach Anspruch 1,
**dadurch gekennzeichnet, dass** das Ventil (8') für den Referenzdruck (S') durch den Steuerkolben (2') über eine Stange (17') betätigbar außerhalb des Steuerkolbens (2') angeordnet ist, hierbei die Druckluft aus der Steuerkammer (S') vom Kanal (7') trennend bzw. verbindend.

8. Steuerventil nach Anspruch 1,
**dadurch gekennzeichnet, dass** das Ventil (8"") für den Referenzdruck (S"") durch den Steuerkolben (2"") über eine Stange (17"") betätigbar außerhalb des Steuerkolbens (2"") angeordnet ist, hierbei die Druckluft aus der Steuerkammer (S"") von einem Zwischenraum (31"") zwischen dem Rückschlagventil (1"") und dem Beschleunigungsventil (6"") trennend bzw. verbindend.

9. Steuerventil nach Anspruch 1,
**dadurch gekennzeichnet, dass** zur Betätigung der Querschnittsveränderung der Drosselstelle (10"") eine Stange (17"") in einer Verlängerung des Beschleunigungsventils (6"") verwendet wird, die in Dichtungen (16"") axial verschieblich gelagert ist, wobei an mindestens einer der Dichtungen (16"") der Druck des Kanals (7"") anliegt und in der Stange Düsen (10"" und 11"") sowie eine Bohrung (23"") integriert sind, wobei bei geschlossenem Beschleunigungsventil (6"") die Dichtungen die Verbindung vom Kanal (7"") in die Umgebung absperren, bei begrenztem Öffnen des Beschleunigungsventils (6"") sich die Bohrung (23"") so über eine der Dichtungen (16"") schiebt, dass diese einen Bypass zur Dichtung bildet, an dessen anderen Ende parallel die Drosselstellen (10"" und 11"") liegen, bei weiterer Öffnung des Beschleunigungsventils (6"") sich zusätzlich auch die Drosselstelle (10"") über die Dichtung (16"") schiebt, so dass die Drosselstelle (11"") in Reihe zur Parallelschaltung der Bohrung (23"") mit der Düse (10"") einen verkleinerten Bypass des Kanals (7"") zur Umgebung darstellt.

10. Steuerventil nach einem der vorstehenden Ansprüche,
**dadurch gekennzeichnet, dass** auf einem Weg der Druckluft über die Düsen (10 und/oder 11) oder der Bohrung (23) zur Umgebung ein weiterer Kanal (15) mit einer bestimmten Drosselwirkung für die ausströmende Druckluft angeordnet ist.

11. Schienenfahrzeug, umfassend eine pneumatische Bremsanlage mit mindestens einem pneumatischen Steuerventil nach einem der vorstehenden Ansprüche.

## Claims

1. Control valve for indirectly acting compressed air brakes of rail vehicles, containing a triple pressure element (24) and a twin pressure element (1), comprising a control piston (2; 2') on which acts from one side the pressure of the air in a main air line (L) and from the opposite side the pressure of the air of a slide chamber (S), and which cooperates via a tappet (5) with an acceleration valve (6) which in opened state connects the main air line (L) via a check valve (12), and the slide chamber (S) via a valve (8; 8') or a bore (9), with a channel (7) and further with a channel (13) for additional venting at the start of braking via the triple pressure element (24), and with a vent path (14) in the twin pressure element (1) with the environment, **characterized in that** several choke points (10, 11) are arranged in parallel or in series with each other in the vent path (14) of the channel (7), wherein the effective cross section of at least one of the choke points (10) can be varied via actuating means in the twin pressure element (1) from a closed or inactive state or a minimum cross section to a maximum cross section.

2. Control valve according to Claim 1, **characterized in that** one of the choke points (10) has a variable effective cross section and the other choke point (11) a fixed effective cross section, wherein the cross section is changed by the actuating means of the twin pressure element (1) in that the choke point (10) is opened, closed, reduced, moved outside the effective compressed air flow or can be enlarged by opening of a bypass.

3. Control valve according to Claim 1 or 2, **characterized in that** to actuate the cross section change of the choke point (10'), a rod (17') in an extension of the acceleration valve (6') is used, in which at least choke points (10', 11') are connected to a vent path (14), wherein when the acceleration valve (6) is closed, all choke points (10', 11') create a connection from the channel (7') to the environment, and after the acceleration valve (6') is opened, the choke point (10') is moved by a rod (17') over a dynamic seal (16') fixed in relation to the housing so that it no longer creates a connection from the channel (7) to the environment.

4. Control valve according to Claim 1 or 2, **characterized in that** to connect the channel (7'') with the atmosphere, at least two parallel-connected choke points (10'', 11'') are provided, of which one choke point (11'') permanently connects the channel (7'') with the atmosphere, and the opening or closing of the connection of the channel (7'') to the atmosphere is controlled via the other choke point (10'') via a piston (20'') on which a pressure spring (19'') and the pressure of the channel (7'') act in the closing direction and a reference pressure (S) acts in the opposite direction.

5. Control valve according to Claim 1 or 2, **characterized in that** for connection of the channel (7''') with the atmosphere, at least two series-connected choke points (10''', 11''') are provided, of which one choke point (11''') permanently connects the channel (7''') with the atmosphere, and the effective cross section of the second choke point (10''') can be varied by a bypass switched by a valve (21) such that the opening or closing of the valve (21) is controlled by a piston (20''') on which a pressure spring (22) and the pressure of the air from the channel (7''') act in the closing direction and the pressure of the air from the slide chamber (S) acts in the opposite direction.

6. Control valve according to Claim 1, **characterized in that** the valve (8) for the reference pressure (S) is arranged integrated in the control piston (2).

7. Control valve according to Claim 1, **characterized in that** the valve (8') for the reference pressure (S') is arranged outside the control piston (2') and can be activated by the control piston (2') via a rod (17'), separating or connecting the compressed air from the control chamber (S') from or to the channel (7').

8. Control valve according to Claim 1, **characterized in that** the valve (8'') for the reference pressure (S'''') is arranged outside the control piston (2'''') and can be activated by the control piston (2'''') via a rod (17''''), separating or connecting the compressed air from the control chamber (S'''') from or to an intermediate chamber (31'''') between the check valve (1'''') and the acceleration valve (6'''').

9. Control valve according to Claim 1, **characterized in that** to activate the cross section change of the choke point (10''''), a rod (17'''') in an extension of the acceleration valve (6'''') is used which is mounted axially displaceable in seals (16''''), wherein the pressure of the channel (7'''') lies on at least one of the seals (16''''), and nozzles (10'''' and 11'''') and a bore (23'''') are integrated in the rod, wherein with the acceleration valve (6'''') closed, the seals block the connection of the channel (7'''') to the environment, on limited opening of the acceleration valve (6'''') the bore (23'''') slides over one of the seals (16'''') such that this forms a bypass to the seal, at the other end of which the choke points (10'''' and 11'''') lie in parallel, and on further opening of the acceleration valve (6'''') in addition also the choke point 10'''') slides over the seal (16'''') so that the choke point (11''''), in series to the parallel connection of the bore (23'''') with the nozzle (10''''), constitutes a reduced bypass of the channel (7'''') to the environment.

10. Control valve according to any of the preceding claims, **characterized in that** a further channel (15) with a specific choking effect for the outflowing compressed air is arranged on a compressed air path to the environment via the nozzles (10 and/or 11) or the bore (23).

11. Rail vehicle comprising a pneumatic brake system with at least one pneumatic control valve according to any of the preceding claims.

## Revendications

1. Soupape de commande pour des freins à air comprimé à effet indirect de véhicules ferroviaires, comprenant un organe (24) à trois pressions et un organe (1) à deux pressions, qui a un piston (2, 2') de commande, sur lequel s'applique, d'un côté, la pression de l'air d'un conduit (L) d'air principal, du côté opposé, la pression de l'air d'une chambre (S) de tiroir et qui coopère, par l'intermédiaire d'un poussoir (5), avec une soupape (12) d'accélération, qui, à l'état ouvert, met le conduit (L) d'air principal, par l'intermédiaire d'un clapet (12) antiretour et de la chambre (S) de tiroir, par l'intermédiaire d'une soupape (8; 8') ou d'un trou (9), en communication avec un canal (7) et, en outre, avec un canal (13) pour la mise à l'atmosphère supplémentaire lors du début du freinage par l'organe (24) à trois pressions et avec un trajet (14) de mise à l'atmosphère de l'organe (1) à deux pressions en communication avec l'atmosphère,
**caractérisée en ce que** plusieurs points (10, 11) d'étranglement sont disposés en parallèle ou en série les uns avec les autres dans le trajet (14) de mise à l'atmosphère du canal (7), la section transversale efficace d'au moins l'un des points (10) d'étranglement pouvant être modifiée par des moyens d'actionnement dans l'organe (1) à deux pressions pour passer d'un état fermé ou inefficace ou d'une section transversale minimum à une section transversale maximum.

2. Soupape de commande suivant la revendication 1, **caractérisée en ce que** l'un des points (10) d'étranglement a une section transversale efficace variable, tandis que l'autre point (11) d'étranglement a une section transversale efficace fixe, la variation de la section transversale s'effectuant par des moyens d'actionnement de l'organe (1) à deux pressions, par le fait que le point (10) d'étranglement est ouvert, fermé, réduit, déplacé à l'extérieur du courant d'air comprimé actif ou peut être agrandi par ouverture d'une dérivation.

3. Soupape de commande suivant la revendication 1 ou 2, **caractérisée en ce que**, pour actionner la variation de section transversale du point (10') d'étranglement, il est utilisé une barre (17') dans un prolongement d'une soupape (6') d'accélération, barre dans laquelle au moins des points (10' et 11') d'étranglement sont raccordés à un trajet (14) de mise à l'atmosphère, dans laquelle, lorsque la soupape (6) d'accélération est fermée, tous les points (10', 11') d'étranglement ménagent une communication du canal (7') à l'atmosphère et, après l'ouverture de la soupape (6') d'accélération, le point (10') d'étranglement est fermé par la barre (17'), par l'intermédiaire d'une étanchéité (16') dynamique fixée à une enveloppe, de manière à ce que celui-ci ne ménage plus de liaison du canal (7) à l'atmosphère.

4. Soupape de commande suivant la revendication 1 ou 2, **caractérisée en ce que**, pour mettre le canal (7") en communication avec l'atmosphère, sont prévus au moins deux points (10", 11") d'étranglement en parallèle, dont l'un (11") met constamment le canal (7") en communication avec l'atmosphère, et l'ouverture ou la fermeture de la communication du canal (7") avec l'atmosphère est commandée par l'autre point (10") d'étranglement par l'intermédiaire d'un piston (20"), sur lequel s'applique, dans la direction de fermeture, un ressort (19") de compression et la pression du canal (7") est dans le sens contraire d'une pression (S) de référence.

5. Soupape de commande suivant la revendication 1 ou 2, **caractérisée en ce que**, pour mettre le canal (7"') en communication avec l'atmosphère, sont prévus au moins deux points (10"', 11"') d'étranglement en série, dont l'un (11"') met constamment le canal (7"') en communication avec l'atmosphère, et la section transversale efficace du deuxième point (10"') d'étranglement peut être modifiée par une dérivation branchée par une soupape (21), de manière à ce que l'ouverture ou la fermeture de la soupape (21) soit commandée par un piston (20"'), sur lequel s'applique, dans la direction de fermeture, un ressort (22) de compression et la pression de l'air sortant du canal (7"') et, dans le sens contraire, la pression de l'air venant de la chambre (S) de tiroir.

6. Soupape de commande suivant la revendication 1, **caractérisée en ce que** la soupape (8) pour la pression (S) de référence est intégrée au piston (2) de commande.

7. Soupape de commande suivant la revendication 1, **caractérisée en ce que** la soupape (8') pour la pression (S') de référence est disposée à l'extérieur du piston (2') de commande, de manière à pouvoir être actionnée par le piston (2') de commande par l'intermédiaire d'une barre (17'), la pression de l'air sortant de la chambre (S') de commande séparant ainsi du canal (7') ou y reliant.

8. Soupape de commande suivant la revendication 1, **caractérisée en ce que** la soupape (8"") pour la pression (S"") de référence est disposée à l'extérieur du piston (2"") de commande, de manière à pouvoir être actionnée par le piston (2"") de commande par l'intermédiaire d'une barre (17""), la pression de l'air sortant de la chambre (S"") de commande étant ainsi séparée d'un espace (31"") intermédiaire entre le clapet antiretour (1"") et la soupape (6"") d'accélération ou y étant reliée.

9. Soupape de commande suivant la revendication 1, **caractérisée en ce que**, pour effectuer la variation de section transversale du point (10"") d'étranglement, il est utilisé une barre (17"") dans un prolongement de la soupape (6"") d'accélération, barre qui est montée coulissante axialement dans des étanchéités (16""), dans laquelle la pression du canal (7"")s'applique sur au moins l'une des étanchéités (16"") et il est intégré à la barre des buses (10"" et 11""), ainsi qu'un trou (23""), dans laquelle, lorsque la soupape (6"") d'accélération est fermée, les étanchéités obturent la communication du canal (7"") à l'atmosphère, lorsque la soupape (6"") d'accélération est ouverte d'une manière limitée, le trou (23"") se déplacent sur l'une des étanchéités (16""), de manière à former une dérivation par rapport à l'étanchéité, à son autre extrémité se trouvent en parallèle les points (10"" et 11"") d'étranglement, lorsqu'on ouvre davantage la soupape (6"") d'accélération, supplémentairement le point (10"") d'étranglement se déplace aussi sur l'étanchéité (16""), de sorte que le point (11"") d'étranglement représente, en série au montage en parallèle du trou (23"") avec la buse (10""), une dérivation rendue plus petite du canal (7"") vers l'atmosphère.

10. Soupape de commande suivant l'une des revendications précédentes,
**caractérisée en ce que**, sur un trajet de l'air comprimé passant par les buses (10 et/ou 11) ou le trou (23) et allant vers l'atmosphère, est monté un autre canal (15) ayant un effet d'étranglement défini pour l'air comprimé sortant.

11. Véhicule ferroviaire comprenant un système de frein pneumatique ayant au moins une soupape de commande pneumatique suivant l'une des revendications précédentes.
